# EUROPEAN PATENT APPLICATION

(11) **EP 4 346 320 A1**
(43) Date of publication of application: **03.04.2024**
(21) Application number: 22198334.9
(22) Date of filing: 28.09.2022
(51) Int. Cl.: H04W 76/14, H04W 76/23, H04W 36/00, H04W 36/08, H04W 88/04

(54) **RELAY CELL RESELECTION DURING PATH SWITCHING**

(71) Applicant: Nokia Technologies Oy, 02610 Espoo (FI)
(72) Inventor: YU, Ling, 02700 Kauniainen (FI); VAN PHAN, Vinh, 90100 Oulu (FI); WOLFNER, György Tamás, 1163 Budapest (HU)
(74) Representative: Bryers Intellectual Property Ltd

(57) **Abstract**

There is provided a method, comprising: obtaining, by a user equipment in a first cell, information of at least one candidate relay device, the information including at least a first cell identifier associated with the at least one candidate relay device; transmitting the information to a radio access node of the first cell; receiving, from the radio access node, a path switching command comprising an indication of a relay device among the at least one candidate relay device and a second cell identifier; transmitting, to the relay device, a request to act as a relay for the user equipment, the request comprising an indication of the second cell identifier associated with the path switching command.

## Description

### TECHNICAL FIELD

Various example embodiments relate generally to enabling communication with a network via a relay node, such as a mobile relay, and to path switching failure detection.

### BACKGROUND

It is sometimes beneficial to switch from a direct connection with the network to an indirect connection to the network. The indirect connection may comprise a connection via a relay device. When the relay device is a mobile relay device, such as a user equipment (UE) or some other moving device, problems may arise in the indirect connection establishment.

### BRIEF DESCRIPTION

According to some aspects, there is provided the subject matter of the independent claims. Some further aspects are defined in the dependent claims.

### LIST OF THE DRAWINGS

In the following, the invention will be described in greater detail with reference to the embodiments and the accompanying drawings, in which
Figure 1 presents a network, according to an embodiment;
Figures 2 and 3 show some examples of patch switching procedures;
Figures 4, 6, 7 and 8 show methods, according to some embodiments;
Figures 5A and 5B illustrate path switching procedures, according to some embodiments;
Figure 9 shows a signaling flow diagram, according to some embodiments; and
Figures 10 and 11 illustrate apparatuses, according to some embodiments.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. For the purposes of the present disclosure, the phrases "at least one of A or B", "at least one of A and B", "A and/or B" means (A), (B), or (A and B). For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a radio system, such as one comprising at least one of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE). Term 'eLTE' here denotes the LTE evolution that connects to a 5G core. LTE is also known as evolved UMTS terrestrial radio access (EUTRA) or as evolved UMTS terrestrial radio access network (EUTRAN). A term "resource" may refer to radio resources, such as a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources

The embodiments are not, however, restricted to the systems/RATs given as an example but a person skilled in the art may apply the solution to other communication systems provided with necessary properties. One example of a suitable communications system is the 5G system. The 3GPP solution to 5G is referred to as New Radio (NR). 5G has been envisaged to use multiple-input-multiple-output (MIMO) multi-antenna transmission techniques, more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and being integrable with existing legacy radio access technologies, such as the LTE.

The current architecture in LTE networks is distributed in the radio and centralized in the core network. The low latency applications and services in 5G may require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications). Edge cloud may be brought into RAN by utilizing network function virtualization (NVF) and software defined networking (SDN). Using edge cloud may mean access node operations to be carried out, at least partly, in a server, host or node operationally coupled to a remote radio head or base station comprising radio parts. Network slicing allows multiple virtual networks to be created on top of a common shared physical infrastructure. The virtual networks are then customised to meet the specific needs of applications, services, devices, customers or operators.

In radio communications, node operations may in be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core network operations and base station operations may vary depending on implementation. Thus, 5G networks architecture may be based on a so-called CU-DU split. One gNB-CU controls several gNB-DUs. The term 'gNB' may correspond in 5G to the eNB in LTE. The gNBs (one or more) may communicate with one or more UEs. The gNB-CU (central node) may control a plurality of spatially separated gNB-DUs, acting at least as transmit/receive (Tx/Rx) nodes. In some embodiments, however, the gNB-DUs (also called DU) may comprise e.g. a radio link control (RLC), medium access control (MAC) layer and a physical (PHY) layer, whereas the gNB-CU (also called a CU) may comprise the layers above RLC layer, such as a packet data convergence protocol (PDCP) layer, a radio resource control (RRC) and an internet protocol (IP) layers. Other functional splits are possible too. It is considered that skilled person is familiar with the OSI model and the functionalities within each layer.

In an embodiment, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Some other technology advancements probably to be used are Soft-ware-Defined Networking (SDN), Big Data, and all-IP, to mention only a few nonlimiting examples. For example, network slicing may be a form of virtual network architecture using the same principles behind software defined networking (SDN) and network functions virtualisation (NFV) in fixed networks. SDN and NFV may deliver greater network flexibility by allowing traditional network architectures to be partitioned into virtual elements that can be linked (also through software). Network slicing allows multiple virtual networks to be created on top of a common shared physical infrastructure. The virtual networks are then customised to meet the specific needs of applications, services, devices, customers or operators.

The plurality of gNBs (access points/nodes), each comprising the CU and one or more DUs, may be connected to each other via the Xn interface over which the gNBs may negotiate. The gNBs may also be connected over next generation (NG) interfaces to a 5G core network (5GC), which may be a 5G equivalent for the core network of LTE. Such 5G CU-DU split architecture may be implemented using cloud/server so that the CU having higher layers locates in the cloud and the DU is closer to or comprises actual radio and antenna unit. There are similar plans ongoing for LTE/LTE-A/eLTE as well. When both eLTE and 5G will use similar architecture in a same cloud hardware (HW), the next step may be to combine soft-ware (SW) so that one common SW controls both radio access networks/technologies (RAN/RAT). This may allow then new ways to control radio resources of both RANs. Furthermore, it may be possible to have configurations where the full protocol stack is controlled by the same HW and handled by the same radio unit as the CU.

It should also be understood that the distribution of work between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The embodiments may be also applicable to narrow-band (NB) Internet-of-things (IoT) systems which may enable a wide range of devices and services to be connected using cellular telecommunications bands. NB-IoT is a narrowband radio technology designed for the Internet of Things (IoT) and is one of technologies standardized by the 3rd Generation Partnership Project (3GPP). Other 3GPP IoT technologies also suitable to implement the embodiments include machine type communication (MTC) and eMTC (enhanced Machine-Type Communication). NB-IoT focuses specifically on low cost, long battery life, and enabling a large number of connected devices. The NB-IoT technology is deployed "in-band" in spectrum allocated to Long Term Evolution (LTE) - using resource blocks within a normal LTE carrier, or in the unused resource blocks within a LTE carrier's guard-band - or "standalone" for deployments in dedicated spectrum.

The embodiments may be also applicable to device-to-device (D2D), machine-to-machine, peer-to-peer (P2P) communications. The embodiments may be also applicable to vehicle-to-vehicle (V2V), vehicle-to-infrastructure (V2I), infrastructure-to-vehicle (I2V), or in general to V2X or X2V communications.

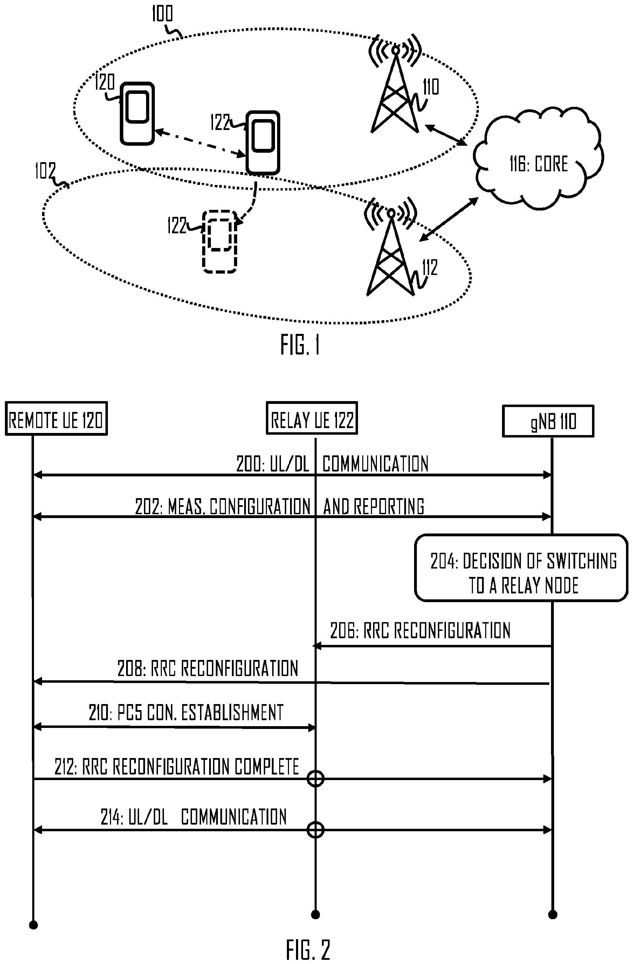

Figure 1 illustrates an example of a communication system to which embodiments of the invention may be applied. The system may comprise a control node 110 providing one or more cells, such as cell 100, and a control node 112 providing one or more other cells, such as cell 102. Each cell may be, e.g., a macro cell, a micro cell, femto, or a pico cell, for example. In another point of view, the cell may define a coverage area or a service area of the corresponding access node. The control node 110, 112 may be an evolved Node B (eNB) as in the LTE and LTE-A, ng-eNB as in eLTE, gNB of 5G, or any other apparatus capable of controlling radio communication and managing radio resources within a cell. The control node 110, 112 may be called a base station, network node, or an access node.

The system may be a cellular communication system composed of a radio access network of access nodes, each controlling a respective cell or cells. The access node 110 may provide user equipment (UE) 120 (one or more UEs) with wireless access to other networks such as the Internet. The wireless access may comprise downlink (DL) communication from the control node to the UE 120 and uplink (UL) communication from the UE 120 to the control node.

Additionally, although not shown, one or more local area access nodes may be arranged such that a cell provided by the local area access node at least partially overlaps the cell of the access node 110 and/or 112. The local area access node may provide wireless access within a sub-cell. Examples of the sub-cell may include a micro, pico and/or femto cell. Typically, the sub-cell provides a hot spot within a macro cell. The operation of the local area access node may be controlled by an access node under whose control area the sub-cell is provided. In general, the control node for the small cell may be likewise called a base station, network node, or an access node.

There may be a plurality of UEs 120, 122 in the system. Each of them may be served by the same or by different control nodes 110, 112. The UEs 120, 122 may communicate with each other, in case D2D communication interface is established between them.

The term "terminal device" or "UE" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In the case of multiple access nodes in the communication network, the access nodes may be connected to each other with an interface. LTE specifications call such an interface as X2 interface. For IEEE 802.11 network (i.e. wireless local area network, WLAN, WiFi), a similar interface may be provided between access points. An interface between an LTE access point and a 5G access point, or between two 5G access points may be called Xn. Other communication methods between the access nodes may also be possible. The access nodes 110 and 112 may be further connected via another interface to a core network 116 of the cellular communication system. The LTE specifications specify the core network as an evolved packet core (EPC), and the core network may comprise a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC), and there the core network may comprise e.g. an access and mobility management function (AMF) and a user plane function/gateway (UPF), to mention only a few. The AMF may handle termination of non-access stratum (NAS) signalling, NAS ciphering & integrity protection, registration management, connection management, mobility management, access authentication and authorization, security context management. The UPF node may support packet routing & forwarding, packet inspection and QoS handling, for example.

NR supports sidelink (SL) based UE-to-Network (U2N) in 3GPP Rel'17 and Rel'18 or beyond. Thus it is important to support service continuity during indirect path switching of remote UE using SL based U2N relay. Sidelink is a link between two UEs, such as the dot-dashed line in Figure 1 between UEs 120 and 122. In U2N relay scenario, a remote UE, such as UE 120, is connected to the network, such as to the control node 110, via the relay UE, such as UE 122.

An example procedure for remote UE switching to indirect path via relay UE from the direct path within the same gNB for 3GPP Rel'17 is shown in Figure 2. In step 200, the remote UE 120 communicates with the network, such as with the gNB 110. In step 202, the U2N remote UE 120 reports one or multiple candidate U2N Relay UE(s) 120 and measurements of a direct path from remote UE to network (Uu link). The remote UE 120 may have measured and/or discovered one or more candidate U2N Relay UE(s) 122. For example, the remote UE 120 may filter appropriate U2N relay UE(s) 122 according to relay selection criteria before reporting. The remote UE 120 shall report only those U2N Relay UE candidate(s) 122 that fulfil predetermined criteria. The reporting of step 202 may include at least U2N relay UE identifier (ID), U2N relay UE' s serving cell ID, and sidelink measurement quantity information. The sidelink measurement quantity is in an embodiment SL-RSRP (sidelink reference signal received power).

In step 204, the gNB 110 decides to switch the direct path of U2N remote UE 120 to an indirect path via a target U2N relay UE 122. The gNB may then send an RRCReconfiguration message to the target U2N relay UE 122 in step 206 for configuring the target U2N relay UE 122 to relay the remote UE's traffic, wherein the message can include at least one of the following: a remote UE's local ID, layer 2 (L2) ID, Uu and PC5 relay RLC channel configuration for relaying, and bearer mapping configuration. PC5 is the interface of sidelink between the UEs.

In step 208, the gNB 110 sends RRCReconfiguration message (e.g. a path switching command) to the U2N remote UE 120 for configuring the U2N remote UE 120 the path switching from direct path to indirect path via the target U2N relay UE 122. The contents in the RRCReconfiguration message can include at least one of the following: U2N relay UE ID, PC5 relay RLC channel configuration for relay traffic and the associated end-to-end radio bearer(s). Based on receiving such message, the U2N Remote UE may stop user plane (UP) and control plane (CP) transmission over the direct path (Uu link).

In step 210, the U2N remote UE establishes PC5 connection with target U2N relay UE 122. In step 212, the U2N remote UE 120 completes the path switch procedure by sending the RRCReconfigurationComplete message to the gNB 110 via the relay UE 122, and in step 214, the data path is switched from the direct path (of step 200) to an indirect path between the U2N remote UE 120 and the gNB 110.

It is noted that the relay UE 122 in Figure 1 and 2 can be in any RRC state. If the relay UE 122 is in RRC_IDLE or RRC_INACTIVE state, the U2N remote UE 120 establishes the PC5 link with the U2N relay UE 122 upon receiving a path switching command (e.g. in connection of step 208) and sends the RRCReconfigurationComplete message via the U2N relay UE 122, which will trigger the U2N relay UE 122 to enter RRC_CONNECTED state.

There are different scenarios related to U2N relaying. For example, 3GPP Rel'18 NR SL Relay enhancement includes an objective to enhance service continuity for single-hop L2 UE-to-NW relay for the following scenarios:
A. Inter-gNB indirect-to-direct path switching (i.e., "remote UE <-> relay UE A <-> gNB X" to "remote UE <-> gNB Y")
B. Inter-gNB direct-to-indirect path switching (i.e., "remote UE <-> gNB X" to "remote UE <-> relay UE A <-> gNB Y")
C. Intra-gNB indirect-to-indirect path switching (i.e., "remote UE <-> relay UE A <-> gNB X" to "remote UE <-> relay UE B <-> gNB X")
D. Inter-gNB indirect-to-indirect path switching (i.e., "remote UE<-> relay UE A <-> gNB X" to "remote UE <-> relay UE B <-> gNB Y")

For scenarios B, C and D, the relay UE can be in any RRC state. The Rel'17 procedures as illustrated in Figure 2 for intra-gNB direct to indirect path switching are used as a baseline for inter-gNB direct to indirect path switching with addition of necessary inter-gNB signaling over Xn interface. Rel'17 mechanism for the remote UE to trigger the target U2N relay UE in RRC_IDLE/INACTIVE state to transition to the RRC_CONNECTED state as described above should also be applicable in the Rel'18 inter/intra-gNB scenarios.

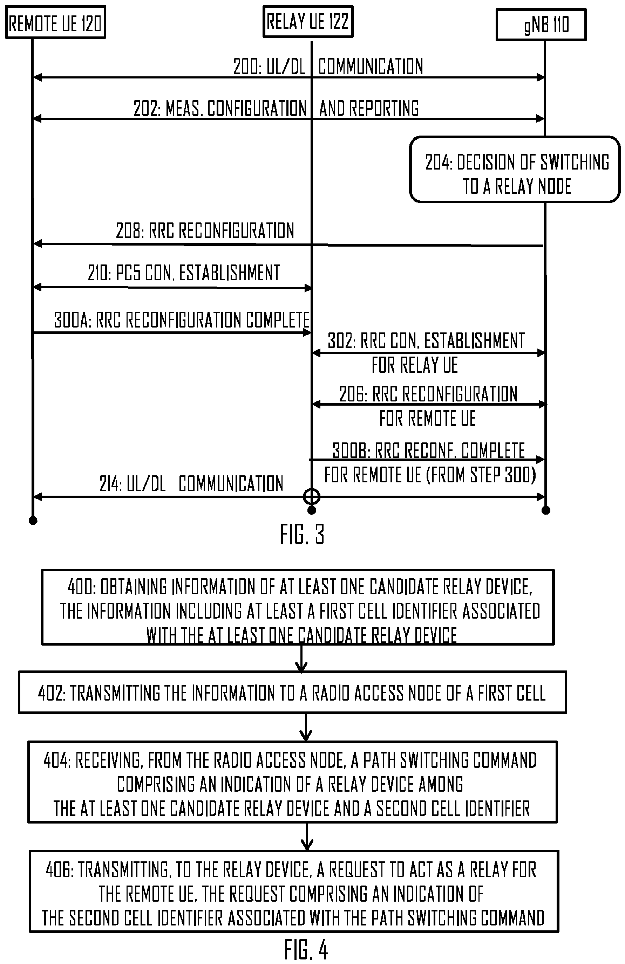

Figure 3 depicts the procedure for intra-gNB case when the target Relay UE is IDLE/INACTIVE. In Figure 3, steps 200-210, and 214 are the same as in Figure 2. In step 300A, the L2 U2N remote UE 120 sends the RRCReconfigurationComplete over PC5 to the L2 U2N relay UE 122. Step 300A triggers the L2 U2N relay UE 122 to establish RRC connection over the Uu link with the gNB 110 in step 302. At this point, the relay UE 122 transits to RRC_CONNECTED state. Thereafter, in step 206,the gNB 110 configures the relay UE for relaying the remote UE's traffic with RRC Reconfiguration procedure. In step 300B, the L2 relay UE 122 forwards the RRCReconfigurationComplete received in step 300A to the gNB 110 over the Uu link.

According to the example baseline procedure illustrated in Figure 2, the measurement report from the remote UE to the serving or source gNB 110 includes the candidate relay UEs' information such as relay UE ID, relay UE's serving cell ID, SL measurement quantity information, etc. Based on those information elements, the gNB 110 makes the decision of path switching and selects the target relay UE 122 for the remote UE 120. Herein, the gNB 110 may use reported relay UE's 122 serving cell ID to identify which cell will serve the remote UE as the target cell for indirect path switching. In case of inter-gNB direct-to-indirect path switching (scenario B above) or inter-gNB indirect-to-indirect path switching (scenario D), the target gNB (e.g. gNB 112) of target relay UE's serving cell may be requested by the source gNB 110 via Xn to provide RRC configuration for the remote UE 120 to make the path switching. Thus, it is the gNB corresponding to relay UE's serving cell to provide the RRC configuration parameters for the remote UE 120 to make the path switching.

Considering that the target relay UE 122 may be in RRC_IDLE or RRC_INACTIVE state, the serving cell of the relay UE 122 should be the cell the relay UE 122 is camping on. The camping cell ID (e.g. assuming cell #A, which may be e.g. cell 100, cell 102, or some other cell) of the relay UE will be included in relay discovery message and will be discovered and reported by the remote UE 120 to the gNB 110 (serving gNB of remote UE 120) as part of the candidate relay UE's information in the measurement report. Then, the target gNB of the relay UE's camping cell (cell #A) will provide RRC reconfiguration parameters for the remote UE's path switching. When the remote UE 120 receives the RRC reconfiguration message from the serving or source gNB 110 (e.g. in step 208 in Figure 2), the remote UE 120 needs to send RRC reconfiguration complete message to the target gNB via the relay UE 122, which triggers the relay UE to establish its own RRC connection with the target gNB corresponding to its current camping cell.

A problem may arise if the relay UE 122 in RRC_IDLE/INACTIVE state has made the cell reselection from cell #A to another cell (e.g. to cell #B) during the path switching preparation phase of the remote UE (i.e. the time period between measurement report from the remote UE to the serving gNB in step 202 of Figure 2 and PC5 connection establishment completed in step 210 of Figure 2). This is because the relay UE 122 would then establish the RRC connection with cell #B instead of cell #A. Thus, the RRC reconfiguration complete message of the remote UE 120 will be relayed to the wrong cell (i.e. cell#B instead of cell #A). However, the path switching configuration of the remote UE 120 is provided by the gNB controlling the cell #A and thus causes failure of the indirect path switching of the remote UE 120.

In case of inter-gNB direct-to-indirect or indirect-to-indirect path switching, if the source gNB (e.g. gNB 110) is responsible for selecting the target relay UE 122 that is served by the target gNB, the relay UE 122 in RRC_CONNECTED state may make HO during path switching phase, which will cause similar path switching failure as described above for the case considering the relay UE in RRC_IDLE/INACTIVE state. Note that the problem setting as described here is similar regardless of whether it is the source gNB or the target gNB that is responsible for selecting the target relay UE 122.

To at least partially tackle these problems, there is proposed a solution for a path switching failure detection to enhance service continuity of the remote UE 120 during path switching.

Figure 4 depicts an example method. The method may be computer-implemented. The method may be performed by a remote device, such as the UE 120 in a first cell (e.g. cell 100). Although described that remote device 120 is a UE (remote UE in the following), the remote device may in some embodiments be any static or mobile device requiring network connection.

As shown in Figure 4, the remote UE, located in a first cell 100, in step 400 obtains information of at least one candidate relay device. An example candidate relay device is UE 122 of Figure 1. However, UE is merely an example of a relay device, and in some other embodiments the relay device may be any device capable of moving or relocating to another cell. In addition, there may be one or more additional UEs detected by the UE 120. The detection of the candidate relay UEs may be based on a ProSe discovery process between user equipments over sidelink, for example.

The information of each candidate relay device includes at least a cell identifier (ID) associated with the at least one candidate relay device (let's call this a first cell ID). By association it is for example meant that the candidate relay UE is camping in the cell or is connected to the access node of the cell. A cell ID may be a physical cell ID or global cell ID, for example. Referring to Figure 1, the candidate relay UE 122 is associated with the cell 100 (before moving to cell 102, as shown in Figure 1 with a dashed line). That is, in this example embodiment, the candidate relay UE is associated with the same cell as the remote UE 120. In such case, the "first cell ID" may be the cell ID of the first cell 100. However, in other embodiments, the first cell ID of a candidate relay UE could be of another cell than the first cell with which the remote UE 120 is currently associated with. In such case the candidate relay UE may be camping in a different cell or is connected to a gNB of another cell. In other words, the "first cell ID" may or may not be the cell ID of the first cell.

In an embodiment, the information of the candidate relay device may comprise also other information elements than the first cell ID. These information elements may comprise e.g. candidate relay UE ID.

In step 402, the remote UE 120 transmits/reports the information to a radio access node (e.g. gNB 110) of the first cell 100. As said in connection of Figure 2, the remote UE 120 may filter the candidate U2N relay UEs according to predetermined relay selection criteria before this reporting.

In step 404, the remote UE 120 receives, from the gNB 110, a path switching command comprising an indication of a relay UE among the at least one candidate relay UE and a second cell identifier. For example, had the remote UE 120 reported several candidate relay UEs to the gNB 110, the gNB 110 (or another network node) may select a target relay UE (e.g. the UE 122) among the several candidate relay UEs based on predetermined criteria. The gNB 110 then informs the remote UE of the selected target relay UE (in this example, the UE 122). As explained in connection of step 208 of Figure 2, the path switching command may comprise also other information.

The second cell ID associated with the path switching command (e.g. carried in the path switching command or RRC reconfiguration message) is of the cell with which the remote UE 120 is configured (by the path switching command) to make the indirect path switching via the relay UE 122. The "second cell ID" associated with the path switching command can be the same as the "first cell ID" associated with the candidate relay UE when the remote UE 120 reported the candidate relay UE(s) to the gNB 110 in step 402.

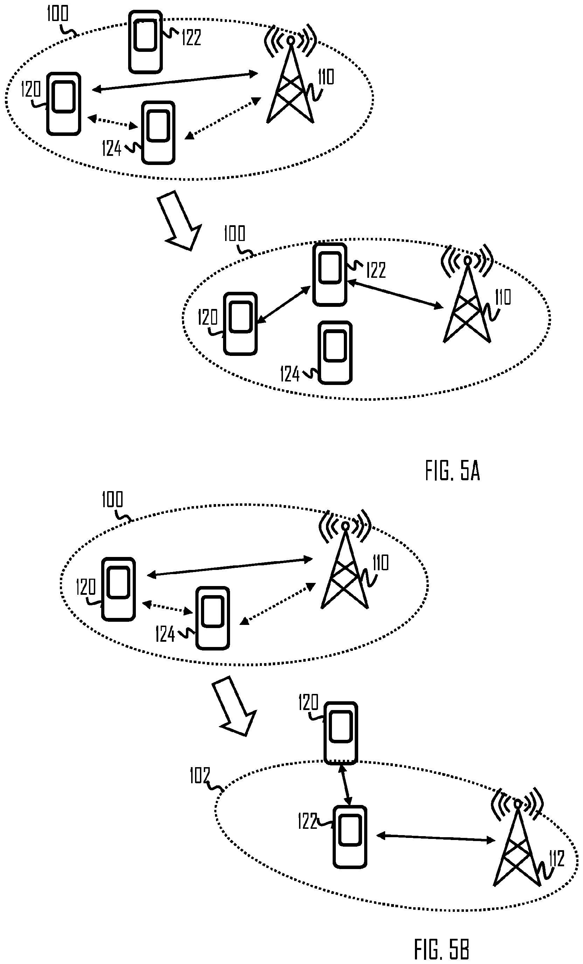

In an embodiment, the path switching command of step 404 causes the remote UE 120 to attempt to switch from a direct or an indirect connection with the first cell 100 to an indirect connection with the first cell 100 via the relay device 122. This is shown in Figure 5A where the remote UE 120 is originally either directly connected with the gNB 110, or indirectly connected with the gNB 110 via a relay UE 124. Based on the path switching command, the remote UE 120 tries to connect with the gNB 110 via another relay UE 122.

In another embodiment, the patch switching command of step 404 causes the remote UE 120 to attempt to switch from a direct or an indirect connection with the first cell 100 to an indirect connection with another cell 102 via the relay device 122. This is shown in Figure 5B where the remote UE 120 is originally either directly connected with the gNB 110, or indirectly connected with the gNB 110 via the relay UE 124. Based on the path switching command, the remote UE 120 tries to connect with the gNB 112 via another relay UE 122.

In step 406, the remote UE 120 transmits to the relay device 122 (i.e. to the selected target relay UE) a request to act as a relay for the remote UE 120, the request comprising an indication of the second cell ID. The remote UE 120 generates the request and the generation comprises including the second cell ID to the request. This provision of the second cell ID allows the relay UE 122 to identify the target cell that the remote UE 120 is configured to make the indirect path switching via the relay UE 122.

This transmission of the second cell ID in step 406 may be a new sidelink message or an existing sidelink message is extended to indicate the second cell ID from the remote UE 120 to the relay UE 122.

In an embodiment, the second cell ID to the relay UE 122 in step 406 is provided in a sidelink RRC message. This may be a new SL RRC message or an existing SL RRC message (e.g. RemoteUEInformationSidelink message) may be extended for the remote UE 120 to indicate the target cell ID (i.e. second cell ID) of path switching to the relay UE 122.

In an embodiment, the second cell ID to the relay device 122 is provided in a sidelink MAC control element (MAC CE). Such MAC CE (e.g. target cell ID indication MAC CE) may be introduced for the remote UE 120 to indicate the target cell ID of path switching to the relay UE 122. The MAC CE may be transmitted either standalone or together with other SL communication message.

In an embodiment, the second cell ID to the relay UE 122 is provided in a sidelink adaptation layer control protocol data unit (PDU).

The transmission of step 406 may be done over SL before or together with sending RRC reconfiguration complete message.

However, as shown in Figure 1, it is assumed that the relay UE 122 has moved to another cell and reselected another cell or the relay UE 122 has made a handover to another cell. In example of Figure 1, the relay UE 122 has moved to cell 102. Such cell change has taken place between steps 400 and 406 of Figure 4. In such case, the cell associated with the selected relay UE 122 has changed and is not the same as reported by remote UE 120 in step 402 (i.e. not the one corresponding to the first cell ID or to the second cell ID).

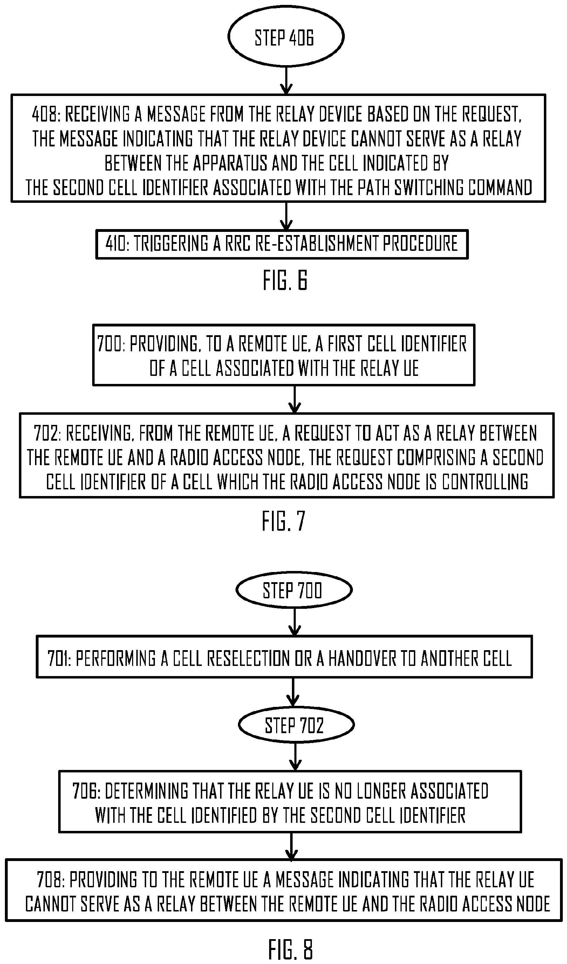

Figure 6 shows that the remote UE 120 in step 408 receives a message from the relay device 122 based on the request. The message may indicate that the relay UE 122 cannot serve as a relay between the remote UE 120 and the cell indicated by the second cell ID associated with the path switching command. The relay UE 122 may e.g. identify that the current serving/camping cell (e.g. cell 102) is not the same as the target cell (e.g. cell 100) indicated by the remote UE 120 in the SL message of step 406. Such mismatch of the cell ID of the relay UE's 122 current serving/camping cell 102 and the target cell 100 of the remote UE 120 is configured to connected to may prevent the relay UE 122 to act as a relay for the remote UE 120 and may trigger the relay UE 122 to send the message, such as NotificationMessageSidelink, to the remote UE 120 in step 408.

In an embodiment, the relay UE 122 may further detect that it cannot be acting as a relay e.g. due to DL RSRP constrains of the previously associated cell 100.

In an embodiment, shown in step 410 of Figure 6, the remote UE 120 may, based on receiving the message from the relay device 122, trigger a RRC re-establishment procedure at the apparatus. This may take place instead of sending RRC reconfiguration complete message (as in Figure 2). The RRC re-establishment procedure may be performed either directly to the network, if a new suitable cell can be selected by the remote UE 120 or indirectly via a relay UE 122 or another relay UE, if a new suitable relay UE can be discovered.

In an embodiment, the message of step 408 from the relay UE 122 comprises a "third cell ID" of a second cell 102 with which the relay UE 122 is currently associated to. As one example embodiment, the RRC re-establishment procedure may comprise establishing a connection with the second cell either directly (e.g. if the remote UE 120 is also under the coverage of the second cell 102) or indirectly via the relay device 122.

In an embodiment, when the relay UE 122 has moved from the first cell 100 to the second cell 102, the RRC re-establishment procedure comprises establishing a connection with the first cell 100 without relaying via the relay device.

In an embodiment, the remote UE 120 may indicate the previous serving cell in a RRC re-establishment procedure message, so that the target gNB of the RRC re-establishment procedure can fetch the UE context for faster connection re-establishment.

Figure 7 depicts an example method. The method may be computer-implemented. The method may be performed by a UE, such as the UE 122.

As shown in Figure 7, the UE 122 in step 700 provides, to the remote UE 120, a first cell ID of a cell associated with the UE 122. This may be e.g. the cell ID of cell 100. The provision of the first cell ID (and possibly other information) may be done via a ProSe discovery process where the UE 122 broadcasts information of itself to nearby UEs, as explained in step 400 of Figure 4.

In step 702, the UE 122 receives, from the remote UE 120, a request to act as a relay between the remote UE 120 and a radio access node (e.g. gNB 110), the request comprising a second cell ID of a cell 100 which the radio access node 110 is providing and/or controlling. The second cell ID in this step may be of the first cell 100, because the UE 122 had in step 700 indicated the first cell ID of the first cell 100.

However, it may be that the UE 122 has made a cell reselection or handover to another cell (e.g. to cell 102), the received second cell ID in step 702 is different than with which the UE 122 currently is associated to. This is depicted in Figure 8.

In step 701 of Figure 8, after step 700 but before step 702, the relay UE performs a cell reselection or a handover to another cell, e.g. to cell 102 (as shown in Figure 4). After this step, the cell associated with the UE 122 is different from the first cell ID broadcasted in step 700.

In step 706 of Figure 8, the UE 122 determines that the UE 122 is no longer associated with the cell 100 identified by the second cell identifier. This may be performed by comparing the second cell ID with a cell ID of the cell with which the UE 122 currently is associated (e.g. where the relay UE 122 is currently located or camping), for example.

Thereafter, in an embodiment, the relay UE 122 provides to the remote UE 120 in step 708 a message indicating that the UE 122 cannot serve as a relay between the remote UE 120 and the radio access node 110. In other words, upon receiving the SL message that includes the target cell ID (i.e. the second cell ID) that the remote UE 120 is configured to connect via the UE 122, the UE 122 sends a notification, such as NotificationMessageSidelink, to the remote UE 120.

In an embodiment, this message of step 708 comprises an identifier of the cell (e.g. cell 102) the UE 122 is currently associated with. This cell ID may be called a third cell ID. This may be beneficial to allow the remote UE 120 to trigger connection re-establishment with the indicated cell e.g. indirectly via the UE 122.

In yet one embodiment, the UE 122 may prevent forwarding transmission from the remote UE 120 to the gNB 110 based on determining that the UE 122 is no longer associated with the cell 100 which the radio access node 110 is controlling (identified by the second cell ID). This may save time by avoiding path switching / connection failure.

One such prevented transmission from the remote UE 120 may be an RRC Reconfiguration Complete message, which would be normally forwarded by the UE 122 to the gNB 102. Forwarding this message to the gNB 102, while its intended receiver is gNB 100, might cause problems in the path switching of the remote UE 120.

If the UE 122 has not done cell reselection or handover of step 701 between steps 700 and 702, the UE 122 may instead proceed with the patch switching procedure with more certainty that the procedure will success. In such case, the UE 122 determines that the cell IDs are the same and thus can proceed with the patch switching.

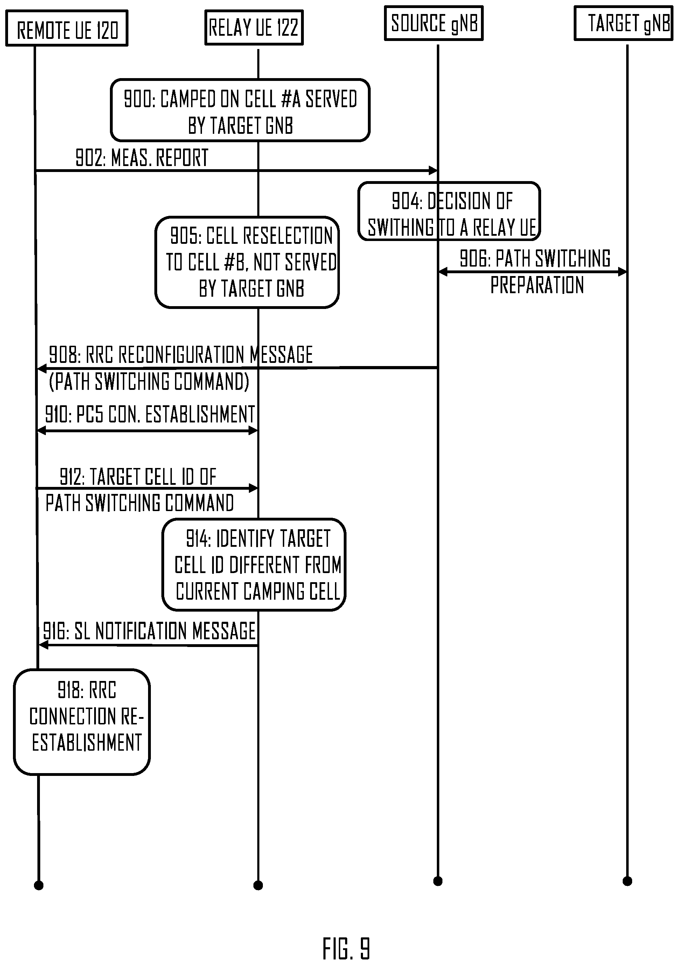

Let us take a further look at some embodiment by referring to a signaling flow diagram of Figure 9, in which a relay UE 122 is assumed to be in step 900 in RRC_IDLE or RRC_INACTIVE state and camping on a Cell #A that is served by the target gNB when the remote UE 120 discovered the relay UE 122 via a SL discovery procedure.

Thus, in step 902, when the remote UE is triggered to send measurement report to its serving gNB (i.e. the source gNB in Figure 9), Cell #A ID is reported as the serving cell of the relay UE 122 in the candidate relay UE list (this may be the first cell ID).

In step 904, based on measurement report, the source gNB makes a decision to switch the remote UE 120 to indirect path via the selected target relay UE 122. In this example, the serving cell of the target relay UE 122 is in the target gNB according to cell #A ID reported by the remote UE 120. It is noted that selection of the target Relay UE 122 may be performed by either the source or the target gNB, or both in combination.

Consequently, the source gNB initiates path switching preparation procedure in step 906 with the target gNB. It is noted that the path switching preparation procedure is similar to handover preparation procedure (e.g. HO Request and HO Request Acknowledge may be reused here for path switching preparation). As one example, during the path switching preparation procedure, the target gNB provides the RRC reconfiguration parameters, such as PC5 relay RLC channel configuration for relaying traffic of remote UE 120 and the associated end-to-end radio bearer(s) for the remote UE 120 and sends it to the source gNB.

Then, the source gNB provides the RRC reconfiguration parameters in RRC Reconfiguration message in step 908 to the remote UE 120. In addition to PC5 and Uu channel configuration parameters, the relay UE ID of the selected target relay UE 122 may also be indicated in step 908.

The reception of the path switching command in step 908 triggers the remote UE 120 to establish PC5 connection with the target relay UE 122 in step 910.

As shown with reference numeral 905, during the time period between the remote UE 120 sending the measurement report to the source gNB in step 902 and the remote UE establishing PC5 connection with the relay UE 122 in step 910, the relay UE 122, as being in RRC_IDLE/INACTIVE state, has performed a cell reselection and is now camping on cell #B. This cell #B is not served by the same target gNB as cell #A.

If the relay UE 122 would transmit RRC configuration complete message of the remote UE 120 to the target gNB of cell #B, a patch switching failure might occur, as gNB of cell #B is not the intended receiver of the RRC configuration complete message (the gNB of cell #A is). To avoid such path switching failure, the remote UE 120 in step 912 provides information of the target cell (e.g. the second cell ID, also called target cell ID) associated to the path switching command to the relay UE 122 in an SL message.

Upon receiving the target cell ID information from the remote UE 120, the relay UE 122 determines whether the current camping cell (i.e. cell #B) is the same as the target cell (i.e. cell #A) that the remote UE 120 is configured to connect to. Such comparison takes place in step 914.

In this example, cell #A is different from cell #B, which triggers the relay UE 122 in step 916 to send a NotificationMessageSidelink to the remote UE 120 to indicate the cell change of the relay UE 122. Herein, an existing indication type (e.g. relayUE-CellReselection or relayUE-HO) in NotificationMessageSidelink can be reused.

Reception of the notification message in step 916 triggers the remote UE 120 in step 918 to initiate RRC connection re-establishment procedure. This solution can reuse existing standard procedures to a large extend, while reducing the recovery time of path switching failure in the cases where the relay UE has done cell reselection (in idle or inactive mode) or handover (in connected mode) during the above described path switching process.

If the relay UE 122 had not done the cell change in step 905, then the cell IDs would be the same and the relay UE 122 would not send the notification message in step 916 but proceed as in Figure 2 by forwarding the RRC reconfiguration complete message to the target gNB. That is, in some embodiments, steps 905, and 914-918 need not take place. Also, for such embodiments, the transmission of the target cell ID (i.e. second cell ID) to the relay UE 122 in step 912 helps the relay UE 122 to be sure that the path switching can be performed. In such case, the relay UE 112 would determine that the target cell ID is the same as the ID of the current cell.

It is noted that at least some of steps 912-916 may be integrated with the PC5 connection establishment procedure in step 910. For example, the message in step 912 may be sent along with a PC5 connection establishment request (e.g. Direct Communication Request) and/or the notification in step 916 may be sent along with a PC5 connection establishment reject (e.g. Direct Communication Reject). This option may be faster and lighter in terms of signalling overhead.

The example of Figure 9 is given by assuming the relay UE 122 in RRC_IDLE/INACTIVE state makes cell reselection during the remote UE's path switching. The same problem of path switching failure may happen in the case when the relay UE 122 in RRC_CONNECTED state makes HO during path switching preparation phase or after the source gNB sends RRC Reconfiguration message to the remote UE 120 in step 908. The proposed solution can be applied for the HO case as well, and a benefit of the proposes solution would apply there too for quicker determining that a patch switching failure would occur, and for reducing the recovery time of path switching failure.

The example of Figure 9 depicts an inter-gNB direct-to-indirect path switching scenario (scenario B above) and how the path switching failure may be prevented in such scenario. However, the same procedure is applicable to scenarios C and D (i.e. for intra-gNB indirect-to-indirect path switching and inter-gNB indirect-to-indirect path switching) where the selected relay UE 122 during the path switching process performs a cell reselection or handover to another cell.

It is noted that the description uses a term "relay UE" for the UE 122 for reasons of clarity (e.g. to separate from remote UE 120) although the UE 122 eventually may not be able to serve as a relay between the remote UE 120 and the network.

As said, some benefits of the proposed solution comprises quicker and reliable detection of a possible path switching failure detection.

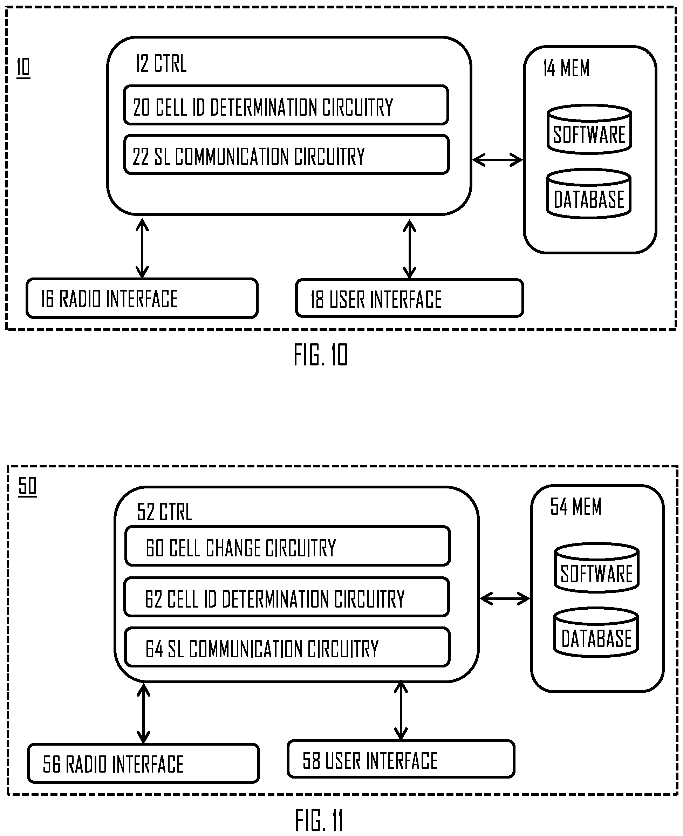

An embodiment, as shown in Figure 10, provides an apparatus 10 comprising a control circuitry (CTRL) 12, such as at least one processor, and at least one memory 14 storing instructions that, when executed by the at least one processor, cause the apparatus at least to carry out any one of the above-described processes. In an example, the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 10 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

In an embodiment, the apparatus 10 is or is comprised in the UE 120. The apparatus may be caused to execute some of the functionalities of the above described processes.

The apparatus may further comprise a radio interface (TRX) 16 comprising hardware and/or software for realizing communication connectivity according to one or more communication protocols. The TRX may provide the apparatus with communication capabilities to access the radio access network, for example.

The apparatus may also comprise a user interface 18 comprising, for example, at least one keypad, a microphone, a touch display, a display, a speaker, etc. The user interface may be used to control the apparatus by the user.

The control circuitry 12 may comprise a cell ID determination circuitry 20 for determining the cell ID of the relay UE and for determining the cell ID of the path switching command, according to any of the embodiments. The control circuitry 12 may further comprise a sidelink communication circuitry 22 for communicating the cell ID of the path switching command to the relay UE, according to any of the embodiments.

An embodiment, as shown in Figure 11, provides an apparatus 50 comprising a control circuitry (CTRL) 52, such as at least one processor, and at least one memory 54 storing instructions that, when executed by the at least one processor, cause the apparatus at least to carry out any one of the above-described processes. In an example, the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 50 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

In an embodiment, the apparatus 50 is or is comprised in the UE 122. The apparatus may be caused to execute some of the functionalities of the above described processes.

The apparatus may further comprise communication interface (TRX) 56 comprising hardware and/or software for realizing communication connectivity according to one or more communication protocols. The TRX may provide the apparatus with communication capabilities to access the radio access network, for example.

The apparatus may also comprise a user interface 58 comprising, for example, at least one keypad, a microphone, a touch display, a display, a speaker, etc. The user interface may be used to control the apparatus by the user.

The control circuitry 52 may comprise a cell change circuitry 60 for determining when to perform a cell change, such as cell reselection, and for performing the cell change, according to any of the embodiments. The control circuitry 52 may comprise a cell ID determination circuitry 62 for e.g. determining the current cell ID of the associated cell, for determining the cell ID of the path switching command as received from the remote UE, and for comparing the cell IDs, according to any of the embodiments. The control circuitry 52 may comprise a sidelink communication circuitry 64 for providing a notification message to the remote UE, in case the comparison reveals that the cell IDs are different.

In an embodiment, an apparatus carrying out at least some of the embodiments described comprises at least one processor and at least one memory including a computer program code, wherein the at least one memory and the computer program code are configured, with the at least one processor, to cause the apparatus to carry out the functionalities according to any one of the embodiments described. According to an aspect, when the at least one processor executes the computer program code, the computer program code causes the apparatus to carry out the functionalities according to any one of the embodiments described. According to another embodiment, the apparatus carrying out at least some of the embodiments comprises the at least one processor and at least one memory including a computer program code, wherein the at least one processor and the computer program code perform at least some of the functionalities according to any one of the embodiments described. Accordingly, the at least one processor, the memory, and the computer program code form processing means for carrying out at least some of the embodiments described. According to yet another embodiment, the apparatus carrying out at least some of the embodiments comprises a circuitry including at least one processor and at least one memory including computer program code. When activated, the circuitry causes the apparatus to perform the at least some of the functionalities according to any one of the embodiments described.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying soft-ware and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface soft-ware, display software, circuit, antenna, antenna circuitry, and circuitry.

A term non-transitory, as used herein, is a limitation of the medium itself (i.e. tangible, not a signal) as opposed to a limitation on data storage persistency (e.g. RAM vs. ROM).

As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Following is a list of some aspects of the invention.

According to a first aspect, there is provided a method, comprising: obtaining, by a user equipment in a first cell, information of at least one candidate relay device, the information including at least a first cell identifier associated with the at least one candidate relay device; transmitting the information to a radio access node of the first cell; receiving, from the radio access node, a path switching command comprising an indication of a relay device among the at least one candidate relay device and a second cell identifier; transmitting, to the relay device, a request to act as a relay for the us-er equipment, the request comprising an indication of the second cell identifier associated with the path switching command..

Various embodiments of the first aspect may comprise at least one feature from the following bulleted list:
- attempting, based on the path switching command, to switch from a direct or an indirect connection with the first cell to an indirect connection with the first cell via the relay device.
- attempting, based on the path switching command, to switch from a direct or an indirect connection with the first cell to an indirect connection with another cell via the relay device.
- receiving a message from the relay device based on the request, the message indicating that the relay device cannot serve as a relay between the user equipment and the cell indicated by the second cell identifier associated with the path switching command.
- wherein the message from the relay device is received in a NotificationMessageSidelink.
- triggering, based on receiving the message from the relay device, a radio resource control, RRC, re-establishment procedure at the user equipment.
- wherein the message from the relay device comprises a third cell identifier of a second cell with which the relay device is currently associated to, and wherein the RRC re-establishment procedure comprises establishing a connection with the second cell either directly or indirectly via the relay device.
- wherein the request to the relay device is provided in one of: a sidelink radio resource control message, a medium access control control element, or an adaptation layer control protocol data unit.
- wherein the relay device is a user equipment

According to a second aspect, there is provided a method, comprising: providing, by a first user equipment to a second user equipment, a first cell identifier of a cell associated with the first user equipment; receiving, from the second user equipment, a request to act as a relay between the second user equipment and a radio access node, the request comprising a second cell identifier of a cell which the radio access node is controlling.

Various embodiments of the second aspect may comprise at least one feature from the following bulleted list:
- performing a cell reselection or a handover to another cell after providing the first cell identifier; determining that the first user equipment is no longer associated with the cell identified by the second cell identifier; providing to the second user equipment a message indicating that the first user equipment cannot serve as a relay between the second user equipment and the radio access node.
- wherein the message to the user equipment is provided in a NotificationMessageSidelink.
- wherein the message comprises an identifier of the cell the first user equipment is currently associated with.
- restraining of forwarding transmission from the second user equipment to the radio access node based on determining that the first user equipment is no longer associated with the cell identified by the second cell identifier.
- wherein the transmission is a radio resource control Reconfiguration Complete message.

According to a third aspect, there is provided an apparatus, comprising at least one processor, and at least one memory storing instructions that, when executed by the at least one processor, cause the apparatus at least to: obtain, in a first cell, information of at least one candidate relay device, the information including at least a first cell identifier associated with the at least one candidate relay device; transmit the information to a radio access node of the first cell; receive, from the radio access node, a path switching command comprising an indication of a relay device among the at least one candidate relay device and a second cell identifier; transmit, to the relay device, a request to act as a relay for the apparatus, the request comprising an indication of the second cell identifier associated with the path switching command.

Various embodiments of the third aspect may comprise at least one feature from the bulleted list under the first aspect.

According to a fourth aspect, there is provided an apparatus, comprising at least one processor, and at least one memory storing instructions that, when executed by the at least one processor, cause the apparatus at least to: provide, to a user equipment, a first cell identifier of a cell associated with the apparatus; performing a cell reselection or a handover to another cell; receiving, from the user equipment, a request to act as a relay between the user equipment and a radio access node, the request comprising a second cell identifier of a cell which the radio access node is controlling.

Various embodiments of the fourth aspect may comprise at least one feature from the bulleted list under the second aspect.

According to a fifth aspect, there is provided a computer program product embodied on a distribution medium and comprising program instructions which, when executed by an apparatus, cause the apparatus to carry out the method according to the first aspect.

According to a sixth aspect, there is provided a computer program product embodied on a distribution medium and comprising program instructions which, when executed by an apparatus, cause the apparatus to carry out the method according to the second aspect.

According to a seventh aspect, there is provided a computer program product comprising program instructions which, when executed by an apparatus, cause the apparatus to carry out the method according to the first aspect.

According to an eight aspect, there is provided a computer program product comprising program instructions which, when executed by an apparatus, cause the apparatus to carry out the method according to the second aspect.

According to a ninth aspect, there is provided an apparatus, comprising means for performing the method according to the first aspect, and/or means configured to cause the apparatus to perform the method according to the first aspect.

According to a tenth aspect, there is provided an apparatus, comprising means for performing the method according to the second aspect, and/or means configured to cause the apparatus to perform the method according to the second aspect.

According to an eleventh aspect, there is provided computer implemented system, comprising: a server and at least one radio node; and at least one processor and at least one memory storing instructions that, when executed by the at least one processor, cause the system at least to carry out the method according to the first aspect and/or the method according to the second aspect.

According to a twelfth aspect, there is provided computer implemented system, comprising: one or more processors; at least one data storage, and one or more computer program instructions to be executed by the one or more processors in association with the at least one data storage for carrying out the method according to the first aspect and/or the method according to the second aspect.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus, comprising means for:
obtaining information of at least one candidate relay device, the information including at least a first cell identifier associated with the at least one candidate relay device;
transmitting the information to a radio access node of a first cell;
receiving, from the radio access node, a path switching command comprising an indication of a relay device among the at least one candidate relay device and a second cell identifier;
transmitting, to the relay device, a request to act as a relay for the apparatus, the request comprising an indication of the second cell identifier associated with the path switching command.

2. The apparatus of claim 1, wherein the means are further configured for attempting, based on the path switching command, at least one of:
to switch from a direct or an indirect connection with the first cell to an indirect connection with the first cell via the relay device, or
to switch from a direct or an indirect connection with the first cell to an indirect connection with another cell via the relay device.

3. The apparatus of any of claims 1 to 2, wherein the means are further configured for receiving a message from the relay device based on the request, the message indicating that the relay device cannot serve as a relay between the apparatus and the cell indicated by the second cell identifier associated with the path switching command.

4. The apparatus of claim 3, wherein the message from the relay device is received in a NotificationMessageSidelink.

5. The apparatus of any of claims 3 to 4, wherein the means are further configured for triggering, based on receiving the message from the relay device, a radio resource control, RRC, re-establishment procedure at the apparatus.

6. The apparatus of any of claims 3 to 5, wherein the message from the relay device comprises a third cell identifier of a second cell with which the relay device is currently associated to, and wherein the RRC re-establishment procedure comprises establishing a connection with the second cell either directly or indirectly via the relay device.

7. The apparatus of any of claim 1 to 6, wherein the request to the relay device is provided in one of: a sidelink radio resource control message, a medium access control control element, or an adaptation layer control protocol data unit.

8. The apparatus of any of claims 1 to 7, wherein the relay device is a user equipment, and the apparatus is another user equipment.

9. An apparatus, comprising means for:
providing, to a user equipment, a first cell identifier of a cell associated with the apparatus;
receiving, from the user equipment, a request to act as a relay between the user equipment and a radio access node, the request comprising a second cell identifier of a cell which the radio access node is controlling.

10. The apparatus of claim 9, wherein the means are further configured for:
performing a cell reselection or a handover to another cell after providing the first cell identifier;
determining that the apparatus is no longer associated with the cell identified by the second cell identifier;
providing to the user equipment a message indicating that the apparatus cannot serve as a relay between the user equipment and the radio access node.

11. The apparatus of claim 10, wherein the means are further configured for restraining of forwarding transmission from the user equipment to the radio access node based on determining that the apparatus is no longer associated with the cell identified by the second cell identifier.

12. The apparatus of any of claims 1 to 11, wherein the means comprises at least one processor, and at least one memory storing instructions that, when executed by the at least one processor, cause the performance of the apparatus.

13. A method, comprising:
obtaining, by a user equipment in a first cell, information of at least one candidate relay device, the information including at least a first cell identifier associated with the at least one candidate relay device;
transmitting the information to a radio access node of the first cell;
receiving, from the radio access node, a path switching command comprising an indication of a relay device among the at least one candidate relay device and a second cell identifier;
transmitting, to the relay device, a request to act as a relay for the user equipment, the request comprising an indication of the second cell identifier associated with the path switching command.

14. A method, comprising:
providing, by a first user equipment to a second user equipment, a first cell identifier of a cell associated with the first user equipment;
receiving, from the second user equipment, a request to act as a relay between the second user equipment and a radio access node, the request comprising a second cell identifier of a cell which the radio access node is controlling.

15. A computer program product comprising program instructions which, when the program is executed by an apparatus, cause the apparatus to carry out the method according to claim 13 or 14.
